# EUROPEAN PATENT APPLICATION

(11) **EP 4 357 686 A1**
(43) Date of publication of application: **24.04.2024**
(21) Application number: 21946027.6
(22) Date of filing: 17.06.2021
(51) Int. Cl.: F24F 7/007

(54) **VENTILATION SYSTEM**

(71) Applicant: MITSUBISHI ELECTRIC CORPORATION, Chiyoda-ku Tokyo 100-8310 (JP)
(72) Inventor: SOTOKAWA, Hajime, Tokyo 100-8310 (JP); KOMAE, Sota, Tokyo 100-8310 (JP)
(74) Representative: Witte, Weller & Partner Patentanwälte mbB
(86) International application number: PCT/JP2021/022991
(87) International publication number: WO 2022/264350

(57) **Abstract**

A ventilation system (10) includes: a supply air flow path (110) that is a flow path connecting outdoors to an indoor space (101); an exhaust flow path (120) that is a flow path connecting the indoor space (101) to the outdoors; an air supply blower (11) that generates a flow of air to be supplied to the indoor space (101), the air supply blower (11) being provided on the supply air flow path (110); an exhaust blower (12) that generates a flow of air to be exhausted to the outdoors, the exhaust blower (12) being provided on the exhaust flow path (120); and a control device (16) that controls operation of the air supply blower (11) and the exhaust blower (12). When a dehumidifying mode is selected which is a mode for dehumidifying the indoor space (101), the control device (16) puts the indoor space under negative pressure by controlling at least one of the air supply blower (11) and the exhaust blower (12).

## Description

### Field

The present disclosure relates to a ventilation system capable of performing dehumidification or humidification while ventilating a room in a building.

### Background

To achieve both of assurance of indoor air quality by introducing fresh air and an appropriate thermal and humidity environment by air conditioning and dehumidification or humidification is an important issue in terms of comfort in an indoor space where a person performs activities. In order to perform air conditioning and dehumidification or humidification while ventilating the indoor space, outdoor air conditioning is performed. That is, air conditioning is performed for outside air introduced by ventilation, together with cold condensation of an air conditioner, use of a rotor capable of adsorbing humidity, or humidification by means of a humidifier. This makes it possible to ensure a comfortable thermal and humidity environment. As a means for implementing the above, there is a ventilation system with an outdoor air conditioning function. In the ventilation system with an outdoor air conditioning function, it is possible to perform dehumidification or humidification by cooling and dehumidification processing performed by an air conditioner serving as a means of outside air processing, or by heating and humidification in which humidifying operation is performed on air heated by heating operation of the air conditioner.

As a method for dehumidifying or humidifying a room, Patent Literature 1 discloses a building that can provide an energy-saving indoor space comfortable in summer and winter based on interior decoration and an inner wall made of material capable of absorption and desorption of moisture, and based on management of a load of air conditioning, management of a load of dehumidification, and management of water content of a wall. In addition, it is known that it is possible to reduce power consumption of an air conditioner and perform efficient air conditioning and dehumidification or humidification by using a heat pump refrigerant heat exchange as a heat source of the air conditioner. Patent Literature 2 discloses a dehumidifying system in which efficient air conditioning and dehumidifying operation can be performed by an outdoor air conditioner. The dehumidifying system according to Patent Literature 2 discloses a highly reliable dehumidifying system capable of performing an energy-saving operation using a dehumidifying rotor.

### Citation List

### Patent Literature

Patent Literature 1: Japanese Patent Application Laid-open No. 2009-121234
Patent Literature 2: Japanese Patent No. 5695752

### Summary of Invention

### Problem to be solved by the Invention

Since the building described in Patent Literature 1 utilizes natural energy, it is possible to provide an energy-saving and comfortable indoor space. However, this is due to characteristics of the wall material and the interior material capable of absorption and desorption of moisture. Therefore, performance is deteriorated in the long term due to the effect of adhesion of dirt to the wall material and the interior material and clogging of an adsorbing portion caused by aging. Thus, there is a problem in terms of long-term reliability of a living environment. Furthermore, in the dehumidifying system described in Patent Literature 2, indoor temperature and humidity can be adjusted comfortably, but, for example, dehumidifying effect starts up slowly under air conditions in summer since dehumidification is performed while air conditioning is performed. In addition, when the technique described in Patent Literature 2 is applied to humidification under air conditions in winter, it is necessary to continue heating and humidification for a long time so as to increase humidification capacity. This is because humidifying effect starts up slowly. Thus, the dehumidifying system described in Patent Literature 2 has a problem in that the above-described points cause an increase in the amount of power to be consumed before the humidity reaches a target humidity.

The present disclosure has been made in view of the above, and an object of the present disclosure is to provide a ventilation system that can be used for a long period of time, and can shorten operation time required for indoor humidity to reach a target value thereof at the time of dehumidification or humidification as compared with the conventional technique.

### Means to Solve the Problem

In order to solve the above problem and achieve the object, the present disclosure includes: a supply air flow path that is a flow path connecting outdoors to an indoor space; an exhaust flow path that is a flow path connecting the indoor space to the outdoors; an air supply blower that generates a flow of air to be supplied to the indoor space, the air supply blower being provided on the supply air flow path; an exhaust blower that generates a flow of air to be exhausted to the outdoors, the exhaust blower being provided on the exhaust flow path; and a control device that controls operation of the air supply blower and the exhaust blower. When a dehumidifying mode is selected which is a mode for dehumidifying the indoor space, the control device puts the indoor space under negative pressure by controlling at least one of the air supply blower and the exhaust blower.

### Effects of the Invention

The ventilation system according to the present disclosure can be used for a long period of time, and has the effect of enabling reduction of operation time required for indoor humidity to reach a target value thereof at the time of dehumidification or humidification as compared with the conventional technique.

### Brief Description of Drawings

FIG. 1 is a diagram schematically showing an example of a configuration of a ventilation system according to a first embodiment.
FIG. 2 is a flowchart showing an example of a procedure of a method for controlling an air supply blower and an exhaust blower during dehumidification in the ventilation system according to the first embodiment.
FIG. 3 is a diagram showing an example of temporal change in humidity in a dehumidifying mode in the ventilation system according to the first embodiment.
FIG. 4 is a diagram showing an example of temporal change in humidity in a humidifying mode in the ventilation system according to the first embodiment.
FIG. 5 is a diagram schematically showing an example of a configuration of a ventilation system according to a second embodiment.
FIG. 6 is a diagram schematically showing an example of a configuration of a ventilation system according to a third embodiment.
FIG. 7 is a diagram schematically showing an example of a configuration of a ventilation system according to a fourth embodiment.
FIG. 8 is a block diagram showing an example of a hardware configuration of a control unit of a control device included in each of the ventilation systems according to the first to fourth embodiments.

### Description of Embodiments

Hereinafter, ventilation systems according to embodiments of the present disclosure will be described in detail with reference to the drawings.

### First Embodiment.

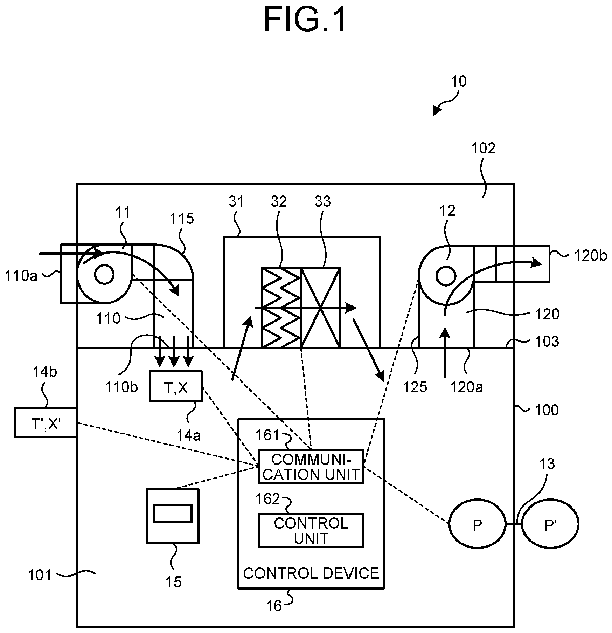

FIG. 1 is a diagram schematically showing an example of a configuration of a ventilation system according to a first embodiment. A ventilation system 10 is applied to a building 100 such as a house, an apartment building, or an office or commercial building. The ventilation system 10 includes an air supply blower 11, an exhaust blower 12, a differential pressure sensor 13, temperature and humidity sensors 14a and 14b, a setting device 15, and a control device 16.

The air supply blower 11 is provided in an air supply duct 115 forming a supply air flow path 110 that is a flow path connecting the outdoors to an indoor space 101 inside the building 100. The air supply blower 11 generates, on the supply air flow path 110, a flow of air to be supplied to the indoor space 101. The supply air flow path 110 is a flow path connecting an outside air inlet 110a and an air supply port 110b. The outside air inlet 110a is provided in an outer wall of the building 100. The air supply port 110b is provided in a ceiling board 103.

The exhaust blower 12 is provided in an exhaust duct 125 forming an exhaust flow path 120 that is a flow path connecting the indoor space 101 of the building 100 to the outdoors. The exhaust blower 12 generates, on the exhaust flow path 120, a flow of air to be exhausted outdoors. The exhaust flow path 120 is a flow path connecting an indoor air inlet 120a and an exhaust outlet 120b. The indoor air inlet 120a is provided in the ceiling board 103. The exhaust outlet 120b is provided in an outer wall of the building 100.

In one example, the air supply blower 11 and the exhaust blower 12 are provided in a ceiling space 102 inside the building 100. In one example, the quantity of air to be blown by the air supply blower 11 and the quantity of air to be blown by the exhaust blower 12 can each switch between a plurality of step values. Hereinafter, a step value of the quantity of air is referred to as a notch.

The differential pressure sensor 13 is a sensor that detects a differential pressure between the indoor space 101 and the outdoors. The differential pressure sensor 13 outputs the differential pressure to the control device 16.

The temperature and humidity sensors 14a and 14b are sensors that detect, as humidity information, information indicating a humidity in the indoor space 101 and an outdoor humidity. The temperature and humidity sensors 14a and 14b detect relative humidity or absolute humidity depending on circumstances. When relative humidity is detected, temperature and humidity are detected. In one example, the temperature and humidity sensor 14a is provided in the vicinity of the air supply port 110b in the indoor space 101, and the temperature and humidity sensor 14b is provided outdoors. The temperature and humidity sensors 14a and 14b measure relative humidity or absolute humidity, and output results of the measurement to the control device 16. Hereinafter, the relative humidity is referred to as humidity, and is referred to as relative humidity and absolute humidity when distinguished from absolute humidity. The temperature and humidity sensor 14a corresponds to a first humidity detection unit, and humidity information to be detected by the temperature and humidity sensor 14a corresponds to first humidity information. The temperature and humidity sensor 14b corresponds to a second humidity detection unit, and humidity information to be detected by the temperature and humidity sensor 14b corresponds to second humidity information.

The setting device 15 is a device that receives input information from a user, and transmits operation setting information. The input information refers to settings for operation of the ventilation system 10. The operation setting information is for making settings for the operation of the ventilation system 10, on the control device 16, according to the input information. In one example, the setting device 15 is a controller switch for making settings, on the control device 16, as to whether to cause the ventilation system 10 to perform dehumidifying operation or humidifying operation. In addition, the setting device 15 may be a portable information terminal such as a smartphone or a tablet as long as an application that enables the setting of the operation of the ventilation system 10 has been installed in the portable information terminal and the portable information terminal can communicate with the control device 16. Hereinafter, in the ventilation system 10, a mode for dehumidifying the indoor space 101 is referred to as a dehumidifying mode, and a mode for humidifying the indoor space 101 is referred to as a humidifying mode.

The control device 16 controls operation of the air supply blower 11 and the exhaust blower 12. The control device 16 includes a communication unit 161 and a control unit 162. The communication unit 161 is connected to the air supply blower 11, the exhaust blower 12, the differential pressure sensor 13, and the temperature and humidity sensors 14a and 14b via wires. The communication unit 161 can communicate by wire or wirelessly with the setting device 15. Furthermore, the communication unit 161 may be configured such that the communication unit 161 can connect to the Internet. The communication unit 161 receives operation setting information from the setting device 15, and passes the operation setting information to the control unit 162. The operation setting information includes an instruction for the setting of the operation of the ventilation system 10. Upon receiving detection results from the differential pressure sensor 13 and the temperature and humidity sensors 14a and 14b, the communication unit 161 passes the detection results to the control unit 162. In addition, the control unit 162 controls operation of the air supply blower 11 and the exhaust blower 12 based on the detection results from the differential pressure sensor 13 and the temperature and humidity sensors 14a and 14b and the operation setting information.

For dehumidification or humidification, the building 100 may include at least any one of an air conditioner 31, a dehumidifier 32, and a humidifier 33 separately from the ventilation system 10. That is, use of at least any one of the air conditioner 31, the dehumidifier 32, and the humidifier 33 makes it possible to perform temperature control and humidity control of the indoor space 101 by performing indoor circulation different from ventilation by the ventilation system 10. Note that the air conditioner 31 and the dehumidifier 32 may be integrated. In one example, the air conditioner 31 may be a device that includes a dehumidifying heat exchanger, and can perform air conditioning. The air conditioner 31, the dehumidifier 32, and the humidifier 33 may be connected to the control device 16 via wires. That is, the control device 16 may control operation of the air conditioner 31, the dehumidifier 32, and the humidifier 33. The control device 16 can cause humidity conditioning operation to be performed on a real-time basis according to operation states of the air conditioner 31, the dehumidifier 32, and the humidifier 33, by configuring the ventilation system 10 such that operation signals and output information from the air conditioner 31, the dehumidifier 32, and the humidifier 33 can be externally input to the control device 16 of the ventilation system 10.

In the first embodiment, when the dehumidifying mode is selected as a result of an instruction to operate in the dehumidifying mode received from the setting device 15, the control unit 162 controls at least one of the air supply blower 11 and the exhaust blower 12 in such a way as to put the indoor space 101 under negative pressure. When the humidifying mode is selected as a result of an instruction to operate in the humidifying mode received from the setting device 15, the control unit 162 controls at least one of the air supply blower 11 and the exhaust blower 12 in such a way as to put the indoor space 101 under positive pressure. The air supply blower 11 and the exhaust blower 12 are connected to the control device 16 and disposed such that the air supply blower 11 and the exhaust blower 12 can separately operate. In addition, as described above, it is possible to assist in the start-up of dehumidification or humidification by performing control in such a way as to put the indoor space 101 under negative pressure or positive pressure during dehumidification or humidification.

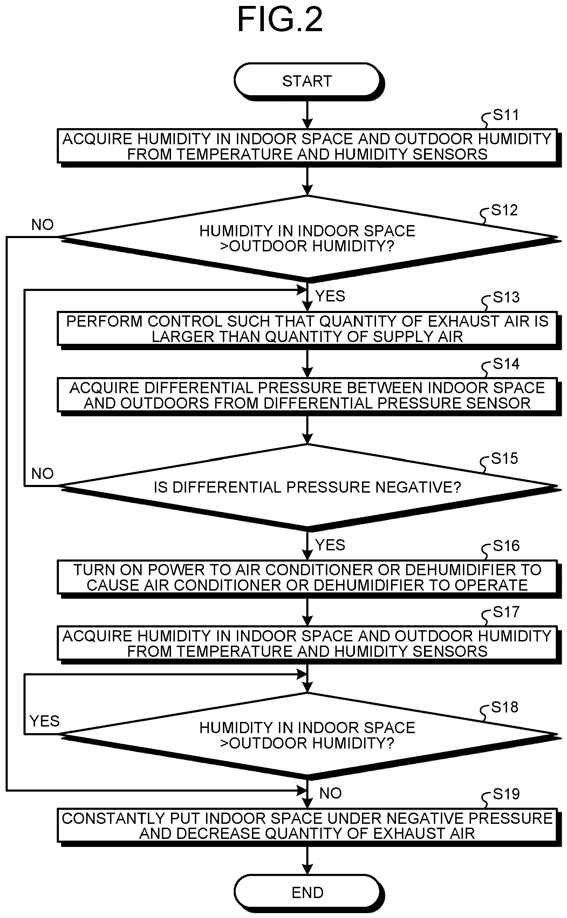

Here, a description will be given of a control method to be performed at the time of dehumidification and humidification. FIG. 2 is a flowchart showing an example of a procedure of a method for controlling the air supply blower and the exhaust blower during dehumidification in the ventilation system according to the first embodiment. Here, it is assumed that the dehumidifying mode is selected according to operation setting information from the setting device 15.

First, the control unit 162 acquires a humidity in the indoor space 101 and an outdoor humidity from the temperature and humidity sensors 14a and 14b, respectively (step S11), and determines whether the humidity in the indoor space 101 is higher than the outdoor humidity (step S12). When the humidity in the indoor space 101 is higher than the outdoor humidity (Yes in step S12), the control unit 162 performs control such that the quantity of exhaust air, which is the quantity of air to be blown by the exhaust blower 12, is larger than the quantity of supply air, which is the quantity of air to be blown by the air supply blower 11 (step S13). In one example, the control unit 162 makes the quantity of exhaust air larger than a just preceding quantity of exhaust air. Furthermore, in another example, the control unit 162 sets the quantity of exhaust air to a largest air quantity of selectable quantities of exhaust air, to decrease the quantity of supply air. That is, the control unit 162 controls the quantity of supply air and the quantity of exhaust air in such a way as to put the indoor space 101 under negative pressure. This is because control performed in such a way as to put the indoor space 101 under negative pressure achieves an effect of easily vaporizing water vapor adsorbed on a wall surface, enhancing the dehumidifying effect of the indoor space 101. Note that it is possible to change the quantity of supply air and the quantity of exhaust air by changing the output of the air supply blower 11 and the exhaust blower 12.

Next, the control unit 162 acquires a differential pressure between the indoor space 101 and the outdoors from the differential pressure sensor 13 (step S14). Thereafter, the control unit 162 determines whether the differential pressure is negative, that is, whether the pressure in the indoor space 101 is smaller than an outdoor pressure (step S15). When the differential pressure is not negative (No in step S15), the process returns to step S13. In an example of the processing from steps S13 to S15, the indoor space 101 is first put under negative pressure, and the notch of the exhaust blower 12 is raised or the notch of the air supply blower 11 is lowered so as to put the indoor space 101 under further negative pressure. In addition, the notch of the exhaust blower 12 is preferably increased to a maximum level.

When the differential pressure is negative (Yes in step S15), the control unit 162 turns on the power to the air conditioner 31 or the dehumidifier 32 to cause the air conditioner 31 or the dehumidifier 32 to operate (step S16). Thereafter, the control unit 162 acquires a humidity in the indoor space 101 and an outdoor humidity from the temperature and humidity sensors 14a and 14b, respectively (step S17), and determines whether the humidity in the indoor space 101 is higher than the outdoor humidity (step S18). When the humidity in the indoor space 101 is higher than the outdoor humidity (Yes in step S18), the process waits until the humidity in the indoor space 101 becomes lower than the outdoor humidity.

When the humidity in the indoor space 101 becomes lower than the outdoor humidity (No in step S18) or when the humidity in the indoor space 101 is lower than the outdoor humidity in step S12 (No in step S12), the control unit 162 constantly puts the indoor space 101 under negative pressure, and decreases the quantity of exhaust air (step S19). That is, the control unit 162 decreases the quantities of air to be blown by the exhaust blower 12 and the air supply blower 11 from the just preceding quantities of air blown by the exhaust blower 12 and the air supply blower 11, and makes a decrease in the quantity of air to be blown by the air supply blower 11 larger than a decrease in the quantity of air to be blown by the exhaust blower 12 so that the quantity of exhaust air is larger than the quantity of supply air. In one example, the control unit 162 decreases the quantity of air to be blown by the exhaust blower 12 by one notch, and decreases the quantity of air to be blown by the air supply blower 11 by two notches. Furthermore, when the air conditioner 31 or the dehumidifier 32 is not operating at this time, the control unit 162 causes the air conditioner 31 and the dehumidifier 32 to operate to maintain dehumidification. As a result, introduction of humidity into the indoor space 101 is prevented, adsorption of water vapor on the wall surface is avoided, and dehumidification of the indoor space 101 is performed by the air conditioner 31 or the dehumidifier 32 prepared separately, so as to achieve comfortable humidity environment and energy-saving dehumidifying operation. In addition, since material capable of absorption and desorption of moisture is not used for the wall material and the interior material of the building 100, dehumidifying performance is not deteriorated over time. Thus, the process ends.

Note that when the humidity in the indoor space 101 is equal to the outdoor humidity in step S12, the process may proceed to step S13 or step S19. When the differential pressure is 0 in step S15, the process may proceed to step S16 or step S13. When the humidity in the indoor space 101 is equal to the outdoor humidity in step S18, the process may repeat step S18 or proceed to step S19.

Meanwhile, when the humidifying mode is selected according to the operation setting information from the setting device 15, the control unit 162 controls at least one of the quantity of air to be blown by the air supply blower 11 and the quantity of air to be blown by the exhaust blower 12 in such a way as to put the indoor space 101 under positive pressure. Specifically, the control unit 162 performs control in such a way as to put the indoor space 101 under positive pressure by decreasing the quantity of air to be blown by the air supply blower 11 and making the quantity of air to be blown by the exhaust blower 12 smaller than the quantity of air to be blown by the air supply blower 11. Normally, humidification is required in winter. Therefore, it is desirable that the amount of outside air to be introduced should not be increased. The indoor space 101 is put under positive pressure in this manner to prevent desorption of water vapor adsorbed on the wall surface. Then, the humidifier 33 provided separately is assisted in starting humidification, so that the start-up of humidification can be accelerated.

In the case of humidification, in one example, the control unit 162 first puts the indoor space 101 under positive pressure, and the notch of the exhaust blower 12 is lowered so as to put the indoor space 101 under further positive pressure. That is, the control unit 162 performs control such that the quantity of exhaust air is lower than the just preceding quantity of exhaust air. In order to also reduce the amount of outside air to be introduced, the control unit 162 desirably also lower the notch of the air supply blower 11 while keeping the indoor space 101 under positive pressure. That is, the control unit 162 causes the quantity of exhaust air and the quantity of supply air to decrease from the just preceding quantity of exhaust air and the just preceding quantity of supply air, respectively, and performs control such that a decrease in the quantity of air to be blown by the air supply blower 11 is smaller than a decrease in the quantity of air to be blown by the exhaust blower 12.

Note that, the case where the control of the dehumidifying mode or the humidifying mode is started according to the operation setting information from the setting device 15 has been described above. In a case where the setting device 15 is a controller switch included in the ventilation system 10, control of a set mode is started by the user operating the controller switch. Furthermore, in a case where the setting device 15 is a portable information terminal such as a smartphone, control of a set mode is started by the portable information terminal remotely operated in the non-contact state with respect to the ventilation system 10. However, the control of the dehumidifying mode or the humidifying mode is started according not only to the operation setting information from the setting device 15. In one example, the control device 16 may be configured as follows. The communication unit 161 of the control device 16 acquires the date and time and weather information from the Web, and the control unit 162 determines whether the date and time and the weather information satisfy conditions of a season and temperature and humidity for which dehumidification is required or conditions of a season and temperature and humidity for which humidification is required. When the date and time and the weather information satisfy any one of the conditions, the control unit 162 starts the control of the dehumidifying mode or the humidifying mode.

Furthermore, in FIG. 1, the temperature and humidity sensor 14a is installed in the vicinity of the air supply port 110b in the indoor space 101, and the temperature and humidity sensor 14b is disposed outdoors. As described above, the temperature and humidity sensors 14a and 14b monitor the humidity of the air supply port 110b in the indoor space 101 and the outdoor humidity, respectively, so that it is possible to perform humidity control that can also follow a humidity change with strong unsteadiness. In addition, the temperature and humidity sensors 14a and 14b may be integrated with the air supply blower 11. The temperature and humidity sensors 14a and 14b and the differential pressure sensor 13 may be separately installed outside the ventilation system 10. In this case, the ventilation system 10 just needs to be configured such that information from each sensor can be input from outside to the control device 16 provided in the ventilation system 10.

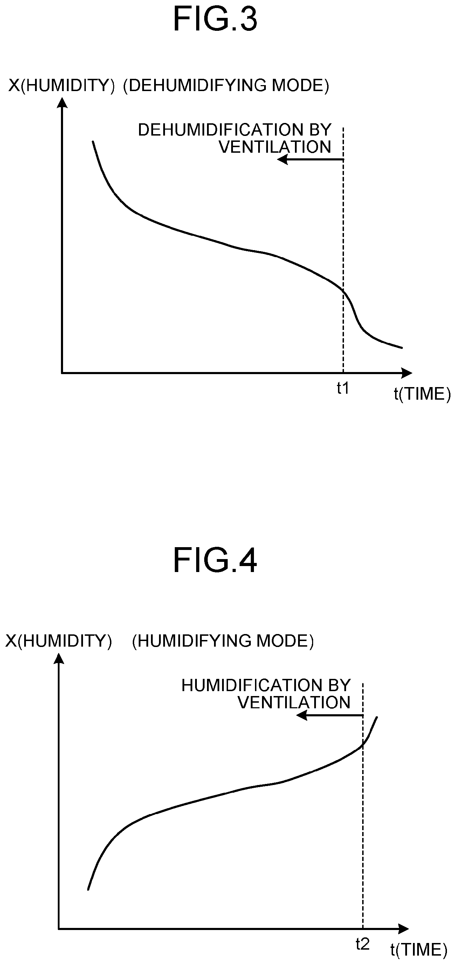

FIG. 3 is a diagram showing an example of temporal change in humidity in the dehumidifying mode in the ventilation system according to the first embodiment., and FIG. 4 is a diagram showing an example of temporal change in humidity in the humidifying mode in the ventilation system according to the first embodiment. In these diagrams, each horizontal axis represents time, and each vertical axis represents the humidity in the indoor space 101.

In the dehumidifying mode, dehumidification is performed by ventilation until time t1, and dehumidifying operation is started by the dehumidifier 32 at time t1 such that the dehumidifying operation is performed together with the dehumidification by ventilation, as illustrated in FIG. 3. In the dehumidification by ventilation, humidity rapidly decreases first, and then decreases at a substantially constant rate. Then, when operation of the dehumidifier 32 is started at time t1, humidity rapidly decreases, and then decreases at a substantially constant rate.

In the humidifying mode, humidification is performed by ventilation until time t2, and humidifying operation is started by the humidifier 33 at time t2 such that the humidifying operation is performed together with the humidification by ventilation, as illustrated in FIG. 4. In the humidification by ventilation, humidity rapidly increases first, and then increases at a substantially constant rate. Then, when operation of the humidifier 33 is started at time t2, humidity rapidly increases.

In a case where the rate of change with respect to a time derivative is a constant value including zero, or in a case where an inflection point occurs, it is possible to monitor, as sensing information from the temperature and humidity sensors 14a and 14b, that the moisture absorption states or moisture desorption states of the indoor space 101 and the wall surface have been completed, or that the dehumidifying operation or the humidifying operation has started. That is, monitoring the time derivative of humidity enables control that follows the environment of the indoor space 101 with high sensitivity.

With regard to the differential pressure sensor 13, it is possible to assist in adsorption or desorption of water vapor on the wall surface by providing a differential pressure of at least 20 Pa or more between the indoor space and the outdoors, even though whether to put the indoor space under negative pressure or positive pressure changes depending on whether a selected mode is the dehumidifying mode or the humidifying mode. Meanwhile, when the differential pressure in the indoor space 101 is too large, resistance to the opening and closing of a door between rooms is expected to increase. Therefore, it is desirable to control the air supply blower 11 and the exhaust blower 12 such that the differential pressure between the indoor space and the outdoors is 200 Pa or less.

At this time, it is possible to also sense the state of the indoor space 101 by utilizing the differential pressure sensor 13, the air supply blower 11, and the exhaust blower 12. For example, when operation is performed in which the quantity of air to be blown by the exhaust blower 12 is increased and the quantity of air to be blown by the air supply blower 11 is stopped, the differential pressure sensor 13 monitors that the indoor space 101 is under negative pressure with the lapse of time in a state where a room is closed, that is, in a state where a door and a window provided in the room are closed. However, it can be known that negative pressure does not easily occur in a state where the door or the window is open, that is, in a state where the room is not fully closed. Therefore, when detecting a state in which negative pressure does not easily occur, the control unit 162 can provide notification that the door or the window is open and urge the user to close the door or the window.

As described above, in the first embodiment, the ventilation system 10 including the air supply blower 11, the exhaust blower 12, the differential pressure sensor 13, the temperature and humidity sensors 14a and 14b, and the control device 16 performs control in conjunction with at least one of the air conditioner 31, the dehumidifier 32, and the humidifier 33 provided separately. Specifically, when dehumidification is performed, the quantities of air to be blown by the air supply blower 11 and the exhaust blower 12 are controlled in such a way as to put the indoor space 101 under negative pressure, and when humidification is performed, the quantities of air to be blown by the air supply blower 11 and the exhaust blower 12 are controlled in such a way as to put the indoor space 101 under positive pressure. It is possible to facilitate vaporization water vapor adsorbed on the wall surface, and to enhance the dehumidifying effect of the indoor space 101 by putting the indoor space 101 under negative pressure. In addition, it is possible to prevent adsorption of water vapor on the wall surface, and to enhance the humidifying effect of the indoor space 101 by putting the indoor space 101 under positive pressure.

Furthermore, in the ventilation system 10 of the first embodiment, the air conditioner 31, the dehumidifier 32, and the humidifier 33 are separately provided, so that the indoor environment can be set to a humidity environment set by the user. For example, in the dehumidifying mode, the air conditioner 31 or the dehumidifier 32 is caused to operate after the indoor space 101 is put under negative pressure to promote vaporization of water vapor adsorbed on the wall surface. As a result, the time from the start-up of operation of the air conditioner 31 or the dehumidifier 32 to an arrival at a target humidity can be shortened as compared with the conventional technique, so that power consumption can be reduced. Furthermore, in the humidifying mode, the air conditioner 31 or the humidifier 33 is caused to operate after the indoor space 101 is put under positive pressure to prevent adsorption of water vapor on the wall surface. As a result, the start-up of humidification can be advanced as compared with the conventional technique. Thus, the time from the start of operation of the air conditioner 31 or the humidifier 33 to an arrival at a target humidity can be shortened as compared with the conventional technique, so that power consumption can be reduced. In addition, adsorption or desorption of water vapor on the wall material and the interior material is utilized by use of the differential pressure, and any wall material or interior material having characteristics of being capable of absorption and desorption of moisture is not used, so that performance is not deteriorated for a long period of time. That is, it is possible to provide the ventilation system 10 having long-term reliability of a living environment as compared with the conventional technique. As described above, the ventilation system 10 has the following effect. The start-up of dehumidification or humidification of the indoor space 101 is promoted by the control of differential pressure, and it is possible to use the ventilation system 10 without impairing functions thereof for a long period of time. In addition, operation time can be shortened with respect to a target value of the indoor humidity at the time of dehumidification or humidification as compared with the conventional technique.

### Second Embodiment.

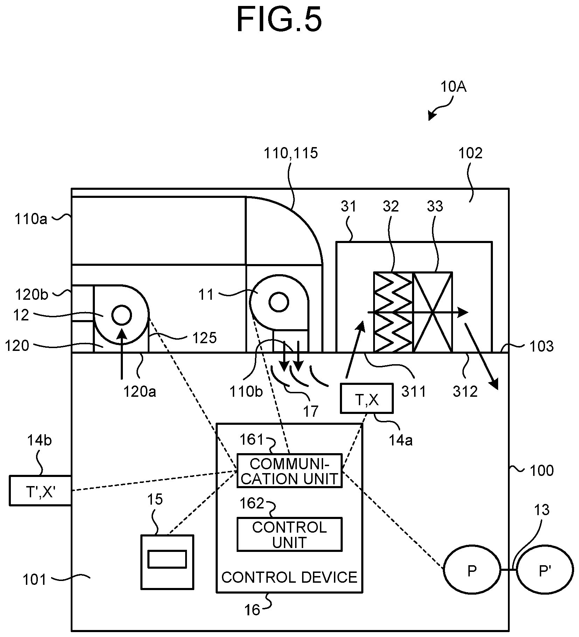

FIG. 5 is a diagram schematically showing an example of a configuration of a ventilation system according to a second embodiment. Note that the same constituent elements as those in the first embodiment are denoted by the same reference numerals, and description thereof will be omitted. A ventilation system 10A of the second embodiment further includes an air supply control member 17 located on the indoor space 101 side of the air supply port 110b, that is, at an outlet end of the supply air flow path 110 leading to the indoor space 101. The air supply control member 17 can change a direction of supply air. Examples of the air supply control member 17 include a shutter and a louver capable of changing the quantity of air and the direction of air flow. Although not illustrated, the air supply control member 17 includes an air flow direction changing member and a drive unit that drives the air flow direction changing member. Thus, the air supply control member 17 can change the quantity of air or the direction of air flow according to an instruction from the control device 16. As a result of providing the air supply control member 17, it is possible to adjust the amount of air to be introduced into the indoor space and control a direction in which introduced air is blown. Furthermore, it is possible to assist in dehumidification or humidification by performing blowing control by means of the air supply control member 17.

In addition, the air supply port 110b and an indoor air inlet 311 of the air conditioner 31 are disposed such that the air supply port 110b and the indoor air inlet 311 are adjacent to each other, and the air supply control member 17 is configured such that the air supply control member 17 can send air from the air supply port 110b toward the indoor air inlet 311 of the air conditioner 31.

When the dehumidifying mode is performed in a case where outdoor humidity is lower, after completion of initial dehumidification of the indoor space 101 including the wall surface, the control unit 162 controls the direction of the air supply control member 17 such that outside air is blown onto a wall surface. As a result, it is possible to improve the convective humidity transfer rate in the vicinity of the wall surface and to promote desorption of humidity from the wall surface. The convective humidity transfer rate indicates ease of transfer of water vapor to the surroundings. The control unit 162 simultaneously decreases the quantity of air to be blown by the exhaust blower 12. As a result, dried air taken in from outside air is selectively blown onto the wall surface, so that it is possible to further dehumidify the wall surface. Furthermore, when humidity in the indoor space 101 decreases to the same level as outdoor humidity, the control unit 162 starts operation of the air conditioner 31 or the dehumidifier 32, and performs control in such a way as to cause air flow generated by the air supply blower 11 to be blown from the air supply control member 17 with respect to return air from the air conditioner 31 or the dehumidifier 32, that is, a return in the air conditioner 31 or the dehumidifier 32. As a result, supply air from the air supply blower 11 is introduced into the air conditioner 31 or the dehumidifier 32, and is directly dehumidified in the air conditioner 31 or the dehumidifier 32, so that comfortable air can be provided to the indoor space 101. In this case, the effect is further enhanced when the air supply control member 17 is a louver capable of controlling the direction of air flow in such a way as to also send air to an air outlet 312 of the air conditioner 31 facing the indoor space 101.

Meanwhile, in the humidifying mode, the control unit 162 acquires an absolute humidity in the indoor space 101 and an absolute humidity of the outdoors as humidity information, and controls the air supply blower 11 and the air supply control member 17 in such a way as to increase the quantity of supply air to allow outside air to be blown onto the wall surface when the absolute humidity of the outdoors is higher than the absolute humidity in the indoor space 101. Thus, outside air is more actively introduced to promote humidity adsorption on the wall surface. As a result, it is possible to assist in humidification of air in the indoor space 101.

The ventilation system 10A of the second embodiment includes the air supply control member 17 on the indoor space 101 side of the air supply port 110b of the supply air flow path 110. The air supply control member 17 can change the quantity and direction of supply air discharged from the supply air flow path 110. In the dehumidifying mode or the humidifying mode, the control unit 162 controls the air supply control member 17 such that supply air is blown onto the wall surface of the indoor space 101. Accordingly, in the dehumidifying mode, it is possible to further dehumidify the wall surface, and in the humidifying mode, it is possible to promote adsorption of humidity on the wall surface.

### Third Embodiment.

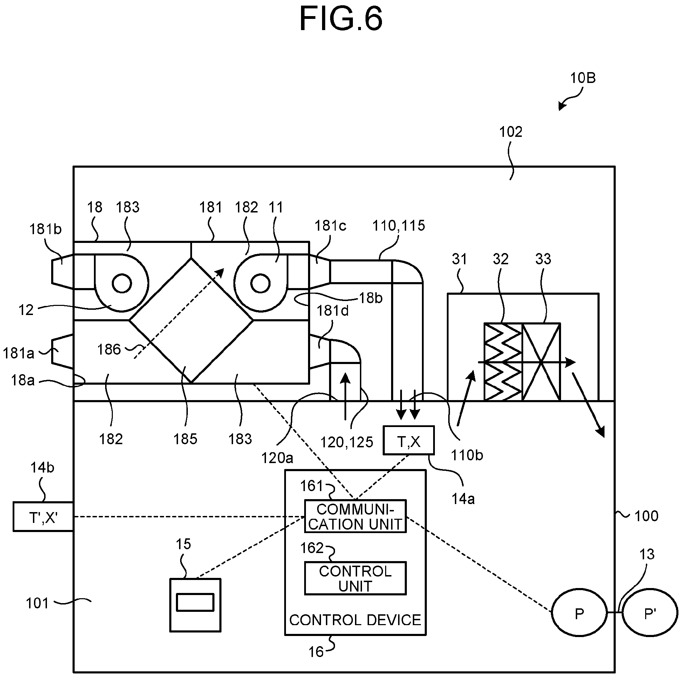

FIG. 6 is a diagram schematically showing an example of a configuration of a ventilation system according to a third embodiment. Note that the same constituent elements as those in the first embodiment are denoted by the same reference numerals, and description thereof will be omitted. The ventilation system 10 of the first embodiment includes the air supply blower 11 and the exhaust blower 12 provided separately from each other. Meanwhile, a ventilation system 10B of the third embodiment includes a total heat exchanger 18 including the air supply blower 11 and the exhaust blower 12. The total heat exchanger 18 includes a housing 181, the air supply blower 11, the exhaust blower 12, and a total heat exchange element 185.

In one example, the housing 181 has a rectangular parallelepiped shape. The housing 181 has an outside air inlet 181a and an exhaust outlet 181b provided in one end face 18a at a longitudinal end of the housing 181. The housing 181 has a supply air outlet 181c and an indoor air inlet 181d provided in another end face 18b facing the one end face 18a in a longitudinal direction of the housing 181. The housing 181 includes a supply air flow path 182 and an exhaust flow path 183. The supply air flow path 182 connects the outside air inlet 181a and the supply air outlet 181c via the total heat exchange element 185. The exhaust flow path 183 connects the indoor air inlet 181d and the exhaust outlet 181b via the total heat exchange element 185. The supply air outlet 181c of the housing 181 and the air supply port 110b of the ceiling board 103 are connected by the air supply duct 115. The indoor air inlet 181d of the housing 181 and the indoor air inlet 120a of the ceiling board 103 are connected by the exhaust duct 125.

In the housing 181, the supply air flow path 182 and the exhaust flow path 183 are partitioned by a partition member. The total heat exchange element 185 performs heat exchange between supply air flowing through the supply air flow path 182 and exhaust air flowing through the exhaust flow path 183. In one example, the total heat exchange element 185 has a structure in which exhaust flow paths and supply air flow paths (not illustrated) are stacked in layers in such a way as to cross each other. The total heat exchange element 185 is disposed in the housing 181 such that the supply air flow path 182 provided in the housing 181 is connected to the supply air flow paths of the total heat exchange element 185, and the exhaust flow path 183 provided in the housing 181 is connected to the exhaust flow paths of the total heat exchange element 185. It is possible to exchange temperature and humidity, that is, total heat by causing supply air and exhaust air to flow through the total heat exchange element 185. Thus, the total heat exchange element 185 has functions equal to the functions of the dehumidifier 32 and the humidifier 33. That is, the total heat exchanger 18 can be regarded as a ventilator having the dehumidifier 32 and the humidifier 33 built thereinto.

In the example of FIG. 6, the air supply blower 11 is located downstream of the total heat exchange element 185 on the supply air flow path 182 in the housing 181. The exhaust blower 12 is located downstream of the total heat exchange element 185 on the exhaust flow path 183 in the housing 181.

In the housing 181, the supply air flow path 182 also includes a bypass air duct 186 that does not pass through the total heat exchange element 185. In this case, an air duct switching unit is provided in the housing 181. The air duct switching unit allows either a route passing through the total heat exchange element 185 or a route passing through the bypass air duct 186 to be selected. Note that although FIG. 6 illustrates the case where the bypass air duct 186 is provided in the supply air flow path 182, the bypass air duct may be provided in the exhaust flow path 183.

When the dehumidifying mode is performed in a case where the humidity in the indoor space 101 is higher than the outdoor humidity, the control unit 162 switches the air ducts in the housing 181 in such a way as to cause air to pass not through the total heat exchange element 185 but through the bypass air duct 186. Since outside air does not pass through the total heat exchange element 185, heat and humidity are not exchanged between supply air and exhaust air, so that outside air humidity can be introduced into the indoor space 101 as it is. When the humidity in the indoor space 101 is equal to or lower than the outdoor humidity, the control unit 162 causes both supply air and exhaust air to pass through the total heat exchange element 185 to exchange humidity. As a result, outside air can be dehumidified and introduced into the indoor space 101 without additional energy input, so that it is possible to assist in dehumidification of the indoor space 101 while achieving energy savings.

Similarly, when the humidifying mode is performed in a case where the outdoor humidity is higher than the humidity in the indoor space 101, the control unit 162 introduces outside air by switching the air ducts in the housing 181 in such a way as to cause air to pass not through the total heat exchange element 185 but through the bypass air duct 186. As a result, since outside air does not pass through the total heat exchange element 185, heat and humidity are not exchanged between supply air and exhaust air, so that outside air humidity can be introduced into the indoor space 101 as it is to assist in humidification of the indoor space. Furthermore, in a case where the humidity in the indoor space 101 becomes high, such as a case where the humidity in the indoor space 101 becomes equal to or higher than the outdoor humidity, the control unit 162 causes both the supply air and the exhaust air to pass through the total heat exchange element 185 to perform humidity exchange. As a result, it is possible to introduce outside air having been humidified into the indoor space 101 and assist in more energy-saving humidification. Note that, it is possible to perform dehumidification and humidification with good controllability by using, in place of the total heat exchange element 185, an outside air processing unit in which an air conditioning coil as a dehumidifying coil and the humidifier 33 are integrally installed.

In the third embodiment, the total heat exchanger 18 is placed instead of the air supply blower 11 and the exhaust blower 12 of the first embodiment. The total heat exchanger 18 includes the air supply blower 11 provided on the supply air flow path 182, the exhaust blower 12 provided on the exhaust flow path 183, and the total heat exchange element 185 provided on the supply air flow path 182 and the exhaust flow path 183. The control unit 162 performs control such that total heat exchange is performed between exhaust air and supply air in the dehumidifying mode and the humidifying mode. As a result, it is possible to perform ventilation operation accompanied by dehumidification or humidification in which the energy of total heat adjustment is saved as much as the total heat recovered by the total heat exchanger 18.

### Fourth Embodiment.

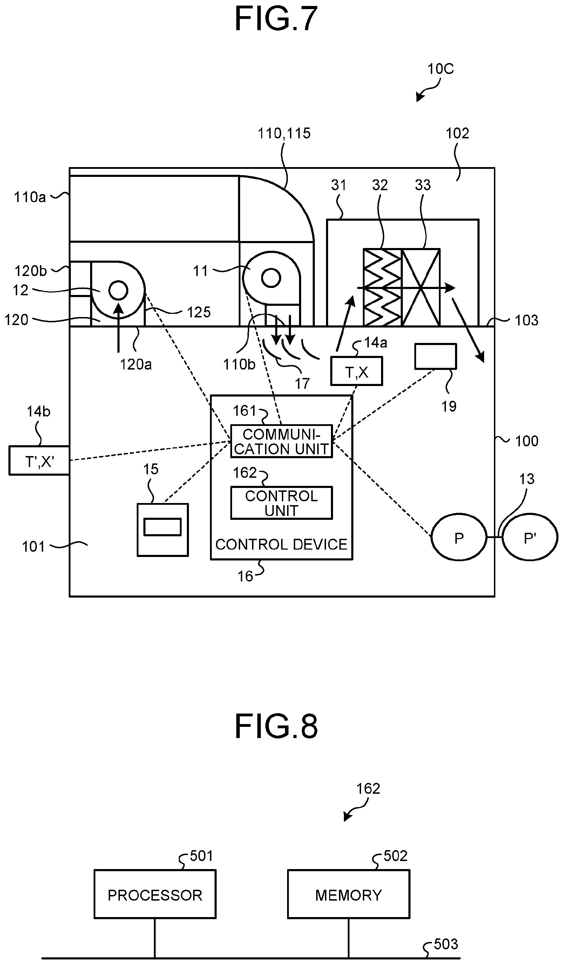

FIG. 7 is a diagram schematically showing an example of a configuration of a ventilation system according to a fourth embodiment. Note that the same constituent elements as those in the first and second embodiments are denoted by the same reference numerals, and description thereof will be omitted. A ventilation system 10C of the fourth embodiment further includes a human detector 19 that detects the number of occupants that is the number of persons present in the indoor space 101. The human detector 19 is connected to the control device 16 via a wire. In one example, the human detector 19 may be installed on the air conditioner 31.

The control unit 162 grasps the number of occupants by using a result of detection by the human detector 19, and adjusts dehumidifying action or humidifying action in consideration of the amount of water vapor from the occupants. In one example, the control unit 162 holds, as data, an average value of the amounts of water vapor from a single person, and calculates the amount of water vapor from occupants based on the data and the number of the occupants.

Furthermore, in the dehumidifying mode, the control unit 162 performs control in such a way as to avoid exposing a person to dehumidified air from the air conditioner 31 as much as possible, and performs operation for reducing water vapor emission from the person. In addition, at the start of dehumidifying operation, the control unit 162 performs control in such a way as to cause air blown from the air conditioner 31 to be blown onto the wall surface. The air blown onto the wall surface in this manner promotes desorption of water vapor from the wall surface. Note that since the control unit 162 can grasp a position of each person in the indoor space 101 from the result of detection by the human detector 19, it is possible to control the air supply control member 17 such that air is blown into an area where there is no person. Meanwhile, in the humidifying mode, the control unit 162 sends a signal to the humidifier 33 so as to reduce the output of the humidifier 33 in consideration of the amount of water vapor from persons.

The ventilation system 10C of the fourth embodiment further includes the human detector 19 that detects persons present in the indoor space 101. The control unit 162 grasps the number of occupants by using the result of detection by the human detector 19, calculates the amount of water vapor from the occupants, and finely adjusts dehumidifying action by the dehumidifier 32 or humidifying action by the humidifier 33. As a result, it is possible to perform ventilation operation accompanied by further energy-saving dehumidification or humidification.

The control unit 162 is implemented by processing circuitry. The processing circuitry may be dedicated hardware, an integrated circuit, or a circuit including a processor. FIG. 8 is a block diagram showing an example of a hardware configuration of the control unit of the control device included in each of the ventilation systems according to the first to fourth embodiments. The control unit 162 includes a processor 501 and a memory 502. The processor 501 is a central processing unit (CPU, also referred to as a processing device, an arithmetic device, a microprocessor, a microcomputer, or a digital signal processor (DSP)), a system large-scale integration (LSI), or the like. Examples of the memory 502 include a nonvolatile or volatile semiconductor memories such as a random access memory (RAM), a read only memory (ROM), a flash memory, an erasable programmable read only memory (EPROM), and an electrically erasable programmable read-only memory (EEPROM (registered trademark)), a magnetic disk, a flexible disk, an optical disk, a compact disk, a mini disk, and a digital versatile disc (DVD). The processor 501 and the memory 502 are connected via a bus line 503.

The control unit 162 is implemented by the processor 501 reading a program from the memory 502 and executing the program, the program describing a procedure for controlling the quantities of air to be blown by the air supply blower 11 and the exhaust blower 12 based on results of detection by the temperature and humidity sensors 14a and 14b and the differential pressure sensor 13. In addition, a plurality of processors and a plurality of memories may cooperate in implementing the above-described functions. Furthermore, some of the functions of the control unit 162 may be implemented as electronic circuitry that is dedicated hardware, and other functions may be implemented by use of the processor 501 and the memory 502. In one example, the control unit 162 controls operation of the air supply blower 11 and the exhaust blower 12 by electric signals.

The configurations set forth in the above embodiments show examples, and it is possible to combine the configurations with another known technique or combine the embodiments with each other, and is also possible to partially omit or change the configurations without departing from the scope of the present disclosure.

### Reference Signs List

10, 10A, 10B, 10C ventilation system; 11 air supply blower; 12 exhaust blower; 13 differential pressure sensor; 14a, 14b temperature and humidity sensor; 15 setting device; 16 control device; 17 air supply control member; 18 total heat exchanger; 19 human detector; 31 air conditioner; 32 dehumidifier; 33 humidifier; 100 building; 101 indoor space; 102 ceiling space; 103 ceiling board; 110, 182 supply air flow path; 110a, 181a outside air inlet; 110b air supply port; 115 air supply duct; 120, 183 exhaust flow path; 120a, 181d, 311 indoor air inlet; 120b, 181b exhaust outlet; 125 exhaust duct; 161 communication unit; 162 control unit; 181 housing; 181c supply air outlet; 185 total heat exchange element; 186 bypass air duct; 312 air outlet.

## Claims

1. A ventilation system comprising:
a supply air flow path that is a flow path connecting outdoors to an indoor space;
an exhaust flow path that is a flow path connecting the indoor space to the outdoors;
an air supply blower to generate a flow of air to be supplied to the indoor space, the air supply blower being provided on the supply air flow path;
an exhaust blower to generate a flow of air to be exhausted to the outdoors, the exhaust blower being provided on the exhaust flow path; and
a control device to control operation of the air supply blower and the exhaust blower, wherein
when a dehumidifying mode is selected which is a mode for dehumidifying the indoor space, the control device puts the indoor space under negative pressure by controlling at least one of the air supply blower and the exhaust blower.

2. The ventilation system according to claim 1, further comprising:
a first humidity detection unit to detect first humidity information that is information indicating a humidity of the indoor space; and
a second humidity detection unit to detect second humidity information that is information indicating a humidity of the outdoors, wherein
the control device acquires the first humidity information and the second humidity information, and when the first humidity information is larger than the second humidity information, the control device makes a quantity of air to be blown by the exhaust blower larger than a just preceding quantity of air blown by the exhaust blower.

3. The ventilation system according to claim 2, wherein the control device sets a quantity of air to be blown by the exhaust blower to a largest air quantity of selectable quantities of air to be blown by the exhaust blower.

4. The ventilation system according to claim 2 or 3, wherein the control device acquires the first humidity information and the second humidity information, and when the first humidity information is smaller than the second humidity information, the control device causes a quantity of air to be blown by the exhaust blower and a quantity of air to be blown by the air supply blower to decrease from a just preceding quantity of air blown by the exhaust blower and a just preceding quantity of air blown by the air supply blower, respectively, such that a decrease in the quantity of air to be blown by the air supply blower is larger than a decrease in the quantity of air to be blown by the exhaust blower.

5. The ventilation system according to claim 1, wherein the control device sets a quantity of air to be blown by the exhaust blower to a largest air quantity of selectable quantities of air to be blown by the exhaust blower.

6. The ventilation system according to claim 1 or 5, further comprising:
a first humidity detection unit to detect first humidity information that is information indicating a humidity in the indoor space; and
a second humidity detection unit to detect second humidity information that is information indicating a humidity of the outdoors, wherein
the control device acquires the first humidity information and the second humidity information, and when the first humidity information is smaller than the second humidity information, the control device causes a quantity of air to be blown by the exhaust blower and a quantity of air to be blown by the air supply blower to decrease from a just preceding quantity of air blown by the exhaust blower and a just preceding quantity of air blown by the air supply blower, respectively, such that a decrease in the quantity of air to be blown by the air supply blower is larger than a decrease in the quantity of air to be blown by the exhaust blower.

7. A ventilation system comprising:
a supply air flow path that is a flow path connecting outdoors to an indoor space;
an exhaust flow path that is a flow path connecting the indoor space to the outdoors;
an air supply blower to generate a flow of air to be supplied to the indoor space, the air supply blower being provided on the supply air flow path;
an exhaust blower to generate a flow of air to be exhausted to the outdoors, the exhaust blower being provided on the exhaust flow path; and
a control device to control operation of the air supply blower and the exhaust blower, wherein
when a humidifying mode is selected which is a mode for humidifying the indoor space, the control device puts the indoor space under positive pressure by controlling at least one of the air supply blower and the exhaust blower.

8. The ventilation system according to claim 7, wherein the control device makes a quantity of air to be blown by the exhaust blower smaller than a just preceding quantity of air blown by the exhaust blower.

9. The ventilation system according to claim 7 or 8, wherein the control device causes a quantity of air to be blown by the exhaust blower and a quantity of air to be blown by the air supply blower to decrease from a just preceding quantity of air blown by the exhaust blower and a just preceding quantity of air blown by the air supply blower, respectively, such that a decrease in the quantity of air to be blown by the air supply blower is smaller than a decrease in the quantity of air to be blown by the exhaust blower.

10. A ventilation system comprising:
a supply air flow path that is a flow path connecting outdoors to an indoor space;
an exhaust flow path that is a flow path connecting the indoor space to the outdoors;
an air supply blower to generate a flow of air to be supplied to the indoor space, the air supply blower being provided on the supply air flow path;
an exhaust blower to generate a flow of air to be exhausted to the outdoors, the exhaust blower being provided on the exhaust flow path; and
a control device to control operation of the air supply blower and the exhaust blower, wherein
when a dehumidifying mode is selected which is a mode for dehumidifying the indoor space, the control device puts the indoor space under negative pressure by controlling at least one of the air supply blower and the exhaust blower, and
when a humidifying mode is selected which is a mode for humidifying the indoor space, the control device puts the indoor space under positive pressure by controlling at least one of the air supply blower and the exhaust blower.

11. The ventilation system according to any one of claims 1 to 10, further comprising:
an air supply control member provided at an outlet end of the supply air flow path leading to the indoor space, the air supply control member being capable of changing a direction of supply air to be blown into the indoor space, wherein
when a dehumidifying mode is performed which is a mode for dehumidifying the indoor space, or when a humidifying mode is performed which is a mode for humidifying the indoor space, the control device controls the air supply control member such that the supply air is blown onto a wall surface in the indoor space.

12. The ventilation system according to any one of claims 1 to 11, further comprising:
a total heat exchanger including a total heat exchange element to perform total heat exchange between air to be supplied from the outdoors to the indoor space and air to be exhausted to the outdoors from the indoor space, wherein
the total heat exchanger includes the air supply blower and the exhaust blower.

13. The ventilation system according to any one of claims 1 to 12, further comprising:
a human detector to detect a number of persons present in the indoor space, wherein
the control device calculates an amount of water vapor from the persons based on the number of the persons detected by the human detector, and controls at least one of a quantity of air to be blown by the air supply blower and a quantity of air to be blown by the exhaust blower in consideration of the amount of water vapor from the persons.
